**Europäisches Patentamt**

**European Patent Office**

**Office européen des brevets**

(11) Veröffentlichungsnummer: **0 600 111 A1**

## (12) EUROPÄISCHE PATENTANMELDUNG

(21) Anmeldenummer: **92120415.2**

(51) Int. Cl.5: **H04L 7/033**

(22) Anmeldetag: **30.11.92**

(43) Veröffentlichungstag der Anmeldung:
**08.06.94 Patentblatt 94/23**

(84) Benannte Vertragsstaaten:
**AT BE CH DE FR GB IT LI NL SE**

(71) Anmelder: **SIEMENS AKTIENGESELLSCHAFT**
**Wittelsbacherplatz 2**
**D-80333 München(DE)**

(72) Erfinder: **Dragotin, Alexander, Dipl.-Ing.**
**Edelweiss-Strasse 177**
**W-8039 Puchheim(DE)**
Erfinder: **Hölzle, Josef, Dipl.-Ing.**
**Südweg 8**
**W-8939 Bad Wörishofen(DE)**

(54) **Verfahren und Schaltungsanordnung zur Abtastung eines Digitalsignals.**

(57) Ein seriell übertragenes Digitalsignal wird mittels eines lokal bereitgestellten Taktsignals, das im wesentlichen die doppelte Bitfolgefrequenz wie das Digitalsignal aufweist, abgetastet. Die Abtastung erfolgt durch ein aus dem Taktsignal abgeleitetes und mit jedem Signalzustandswechsel des Digitalsignals synchronisiertes Abtastsignal.

FIG 1

Die Erfindung betrifft ein Verfahren und eine Schaltungsanordnung zur Übernahme eines Digitalsignals in ein Speicherelement unter Zuhilfenahme eines die doppelte Bitfolgefrequenz des Digitalsignals aufweisenden Taktsignals. Zum Einlesen eines Digitalsignals in ein Speicherelement ist es erforderlich, das Digitalsignal möglichst in der Mitte zwischen zwei möglichen Zustandswechseln des Digitalsignals abzutasten. Die Abtastung erfolgt üblicherweise mit einem Taktsignal, dessen signifikante Flanken gegenüber den Zustandswechselzeitpunkten des Digitalsignals um eine halbe Übertragungszeitdauer des Digitalsignals phasenverschoben sind. Zur Abtastung eines Digitalsignals werden also signifikante Taktflanken benötigt, die in einem festen Phasenbezug zu den Zustandswechselzeitpunkten des Digitalsignals stehen.

Bei der Übertragung von Digitalsignalen über größere Entfernungen würde eine Übertragung des Taktsignals von einer Sendeeinrichtung über eine zusätzlich vorzusehende Leitung zu einer Empfangseinrichtung zu einem erheblichen Aufwand führen.

Eine Möglichkeit zur Bereitstellung eines lokalen Taktsignals besteht in der Taktrückgewinnung aus dem Digitalsignal mittels eines Phasenregelkreises (Phase Locked Loop). Dabei synchronisiert sich der Phasenregelkreis auf die eingangsseitig zugeführte Bitfolgefrequenz des ankommenden Digitalsignals auf und gibt ausgangsseitig ein Taktsignal mit der erforderlichen Phasenlage ab. Zum einen erfordert ein solcher Phasenregelkreis erheblichen schaltungstechnischen Aufwand nicht zuletzt für nicht-integrierbare, frequenzbestimmende Bauteile und zum andern weist er charakteristischerweise einen gewissen Zeitbedarf zur Ausregelung von Phasensprüngen des Digitalsignals auf.

Bei der Übertragung von asynchronen Digitalsignalen ist es üblich, das Digitalsignal im Empfänger mit einem lokal bereitgestellten Taktsignal abzutasten, dessen Bitfolgefrequenz ein Vielfaches der Bitfolgefrequenz des Digitalsignals aufweist. Dabei wird das empfangene Digitalsignal mehrmals pro Bit-Periode abgetastet und aus den Abfrageergebnissen die empfangene Bitinformation ermittelt. Liegt jedoch die Bitfolgefrequenz des Digitalsignals bereits an der oberen Grenze der (jeweils) zum Einsatz kommenden Logiktechnologie (z.B. ECL), so ist die Bereitstellung eines Taktsignals mit einer gegenüber dem Digitalsignal um ein Vielfaches höheren Bitfolgefrequenz nicht möglich.

Aus der EP-0 408 969 ist eine Schaltungsanordnung zur Übernahme eines Digitalsignals in ein Speicherelement unter Zuhilfenahme eines die doppelte Bitfolgefrequenz des Digitalsignals aufweisenden lokalen Taktsignals bekannt geworden. Diese Schaltungsanordnung erfordert ein hohes Maß an Synchronität zwischen Digitalsignal und Taktsignal wobei der Funktionsbereich auf momentane Phasenabweichungen zwischen dem Digitalsignal und dem Taktsignal von einer 1/4-Periode des Digitalsignals begrenzt ist.

Der Erfindung liegt das Problem zugrunde, ein Verfahren und eine Schaltungsanordnung gemäß der eingangs umrissenen Gattung anzugeben, bei denen eine Abweichung der Bitfolgefrequenz des Taktsignals um bis zu 25% von der doppelten Bitfolgefrequenz des Digitalsignals erlaubt ist und bei denen mit jedem Zustandswechsel des Digitalsignals die Lage des Toleranzbereichs neu festgelegt wird.

Das Problem wird bei einem gattungsgemäßen Verfahren dadurch gelöst, daß

- aus dem Taktsignal eine Anzahl von vier Hilfstaktsignalen abgeleitet werden, die jeweils während zweier Periodendauern des Taktsignals für eine halbe Periodendauer des Taktsignals einen aktiven Zustand einnehmen und die untereinander um eine halbe Periodendauer des Taktsignals phasenverschoben sind,

- bei jedem Zustandswechsel des Digitalsignals das Hilfstaktsignal, in dessen aktiven Zustand der Zustandswechsel fällt, ein aktuelles Koinzidenz-Hilfstaktsignal bildet, wobei ein mit dem aktuellen Koinzidenz-Hilfstaktsignal korreliertes Flip-Flop gesetzt wird,

- das Ausgangssignal des gesetzten Flip-Flops in Verbindung mit dem jedesmaligen Übergang in den aktiven Zustand des Hilfstaktsignals, das gegenüber dem aktuellen Koinzidenz-Hilfstaktsignal um eine Periode des Taktsignals phasenverschoben ist, die Übernahme des aktuellen Zustandes des Digitalsignals in das Speicherelement bewirkt,

- bei einem Wechsel des Koinzidenz-Hilfstaktsignals das mit dem bisher gültigen Koinzidenz-Hilfstaktsignal korrelierte Flip-Flop zurückgesetzt wird.

Eine das erfindungsgemäße Verfahren realisierende Schaltungsanordnung ist vollständig digital realisierbar und kann unproblematisch und kostengünstig in jeder Technologie integriert werden. Das Taktsignal für die erfindungsgemäße Lösung muß lediglich etwa die doppelte Bitfolgefrequenz des Digitalsignals aufweisen, wobei die Lösung so lange ein mit jedem Zustandwechsel des Digitalsignals synchronisiertes Abtastsignal für das Digitalsignal zur Verfügung stellt, wie zwischen zwei Zustandswechseln des Digitalsignals die momentane Summe aus konstantem Phasenschlupf und einem schnellen Phasenjitter zwischen der halben Bitfolgefrequenz des Taktsignals und der Bitfolgefrequenz des Digitalsignals kleiner ist als ein Viertel der Bitübertragungsdauer des Digitalsignals.

Die Erfindung wird nun als Ausführungsbeispiel in zum Verständnis der Erfindung erforderlichem Umfang anhand von Figuren beschrieben.

Dabei zeigen:

Fig. 1 eine Schaltungsanordnung, bei der die Erfindung realisiert ist

Fig. 2 nähere Einzelheiten des in Fig. 1 mit HTEE bezeichneten Blocks

Fig. 3 charakteristische Signalverläufe.

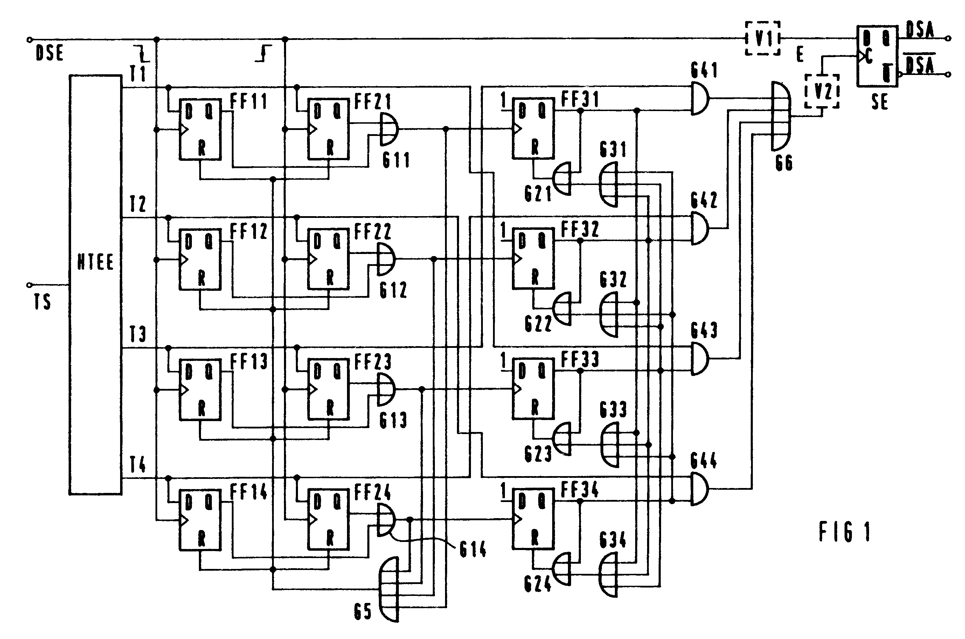

In Fig. 1 ist eine Schaltungsanordnung dargestellt, bei der ein seriell übertragenes Digitalsignal DSE in ein Speicherelement SE übernommen wird. Das Digitalsignal wird gegebenenfalls über ein weiter unten näher beschriebenes Verzögerungselement V1 dem mit D bezeichneten Eingang des beispielsweise durch ein D-Flip-Flop gegebenen Speicherelementes zugeführt. Die übrige Schaltung dient der Erzeugung eines an dem mit C bezeichneten Eingang zugeführten Signals zur Übernahme des aktuellen Zustandes des Digitalsignals. Einer Hilfstakterzeugungseinrichtung HTEE wird ein Taktsignal TS zugeführt, das einerseits ein ausgeglichenes Puls-Pause-Verhältnis von im wesentlichen 1:1 und zum andern im wesentlichen die doppelte Bitfolgefrequenz wie das Digitalsignal aufweist. Eine Abweichung der Bitfolgefrequenz des Taktsignals von der doppelten Bitfolgefrequenz des Digitalsignals um bis zu 25 % nach oben und nach unten ist für das Schaltungsbeispiel zulässig. Die Hilfstakterzeugungseinrichtung gibt an ihren Ausgängen vier Hilfstaktsignale T1...T4 ab.

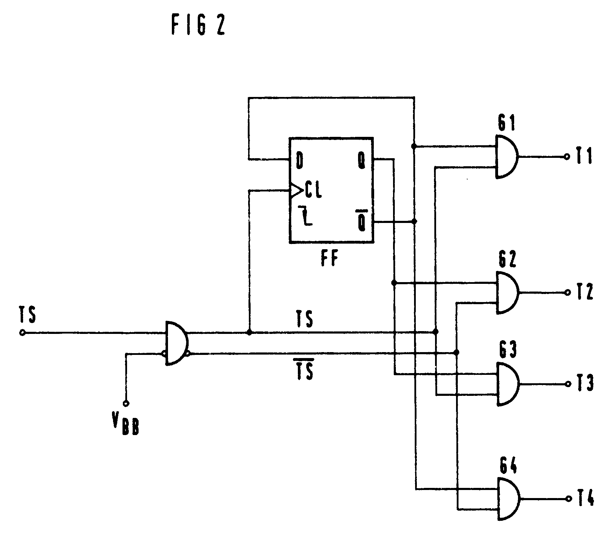

Fig. 2 zeigt ein Ausführungsbeispiel für die Hilfstakterzeugungseinrichtung. Das Taktsignal wird dem nicht-invertierenden Eingang einer beispielsweise in ECL (Emitter-Coupled-Logic)-Technologie ausgeführten Bufferstufe mit differenziellen Eingängen und differenziellen Ausgängen zugeführt. Der invertierende Eingang der Bufferstufe ist mit einer im wesentlichen in der Mitte zwischen den beiden Versorgungsspannungen der Bufferstufe liegenden Festspannung $V_{BB}$ beaufschlagt. Die Bufferstufe gibt an ihrem nicht-invertierenden Ausgang ein Taktsignal TS und an ihrem invertierenden Ausgang das invertierte Taktsignal $\overline{TS}$ ab.

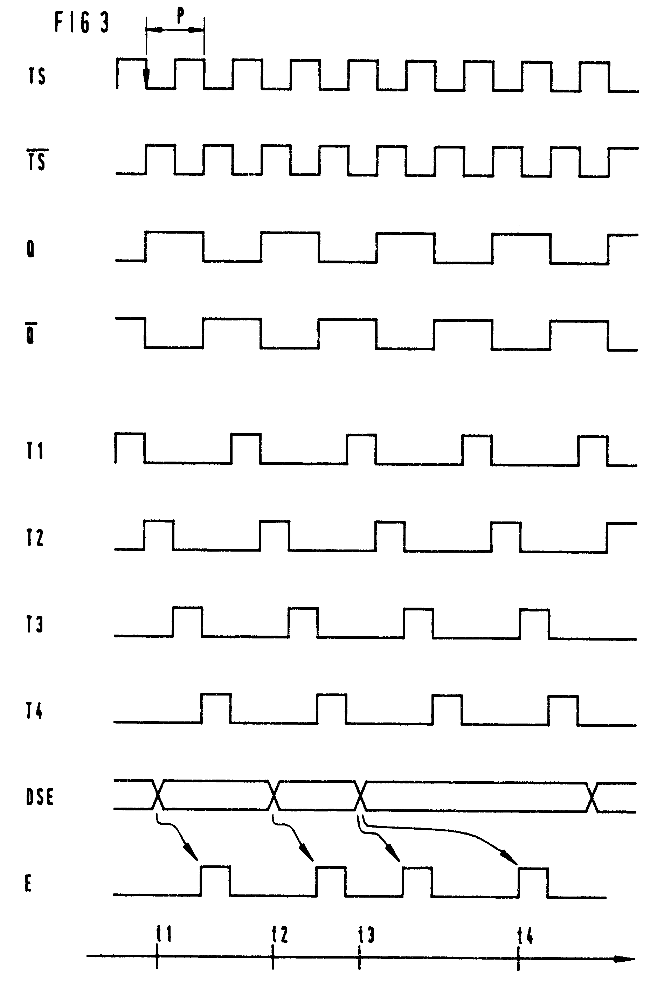

Das nicht-invertierte Taktsignal TS und das invertierte Taktsignal $\overline{TS}$ sind in Fig. 3, Zeilen TS und $\overline{TS}$, dargestellt. Dort ist eine Periode des Taktsignals mit P bezeichnet.

Zurückkommend nach Fig. 2 wird das von der Bufferstufe abgegebene Taktsignal TS einem Flip-Flop FF an seinem mit C1 bezeichneten Takteingang zugeführt. Das Flip-Flop möge mit der fallenden Flanke des am Takteingang zugeführten Signals den an seinem mit D bezeichneten Eingang angelegten Signalzustand zu seinem Ausgang Q durchschalten. An dem mit $\overline{Q}$ bezeichneten Ausgang des Flip-Flops liegt jeweils das zu dem Signal am Ausgang $\overline{Q}$ invertierte Signal an. Der Eingang D ist mit dem Signal des Ausgangs $\overline{Q}$ beaufschlagt. Das Flip-Flop ändert bei dieser Beschaltung nach jeder Periode des Taktsignals den Zustand der Signale an seinen Ausgängen und führt somit eine sogenannte Toggle-Funktion aus.

Fig. 3 zeigt in den Zeilen Q und $\overline{Q}$ die Signalzustände an den Ausgängen des Flip-Flops in zeitlicher Relation zu dem Taktsignal TS. In Fig. 2 ist eine Anzahl von vier Gattern G1...G4, die jeweils die logische UND-Verknüpfung realisieren, jeweils an ihren beiden Eingängen mit dem invertierten oder nicht-invertierten Taktsignal bzw. mit dem Ausgangssignal Q oder $\overline{Q}$ des Flip-Flops beaufschlagt. So sind die Gatter G1 und G4 jeweils an einem Eingang mit dem invertierten Ausgangssignal des Flip-Flops beaufschlagt, die Gatter G2 und G3 mit dem nicht-invertierenden Ausgangssignal des Flip-Flops beaufschlagt, die Gatter G1 und G3 mit dem Taktsignal beaufschlagt und die Gatter G2 und G4 mit dem invertierten Taktsignal $\overline{TS}$ beaufschlagt. Die Gatter G1...G4 liefern an ihren Ausgängen die Hilfstaktsignale T1...T4. Wie aus Fig. 3, Zeilen T1...T4 ersichtlich, weisen die Hilfstaktsignale jeweils während der Dauer zweier Perioden des Taktsignals für die Dauer einer halben Periode des Taktsignals einen aktiven Zustand auf, der im Ausführungsbeispiel durch einen hohen Spannungspegel gegeben sein möge. Die Hilfstaktsignale sind gegeneinander um eine halbe Periode des Taktsignals versetzt, wobei zu einem bestimmten Zeitpunkt jeweils nur ein Hilfstaktsignal einen aktiven Zustand aufweist.

Zurückkommend nach Fig. 1 sind in zwei Spalten angeordnete Flip-Flops FF11...FF14 und FF21...FF24 ersichtlich. Diesen Flip-Flops wird an ihrem Takteingang das Digitalsignal zugeführt. Die Flip-Flops FF11...FF14 mögen durch eine Bauart gegeben sein, bei der der an dem mit D bezeichneten Eingang anliegende Spannungszustand bei einem Wechsel von dem hohen zu dem niedrigen Spannungszustand am Takteingang an den mit Q bezeichneten Ausgang durchgeschaltet wird (negativ flankengetriggertes D-Flip-Flop). Die Flip-Flops FF21...FF24 mögen durch eine Bauart gegeben sein, bei der der an dem mit D bezeichneten Eingang anliegende Spannungszustand bei einem Wechsel von dem niedrigen zu dem hohen Spannungszustand an dem Takteingang an den mit Q bezeichneten Ausgang durchgeschaltet wird (positiv flankengetriggertes D-Flip-Flop). Die Flip-Flops FF11 und FF21 sind an ihren Eingängen mit dem Hilfstaktsignal T1, die Flip-Flops FF12 und FF22 mit dem Hilfstaktsignal T2, die Flip-Flops FF13 und FF23 mit dem Hilfstaktsignal T3 und die Flip-Flops FF14 und FF 24 mit dem Hilfstaktsignal T4 beaufschlagt. Bei einem Zustandswechsel des Digitalsignals vom hohen zum niedrigen Spannungswert liefert nur dasjenige Flip-Flop der Flip-Flops FF11...FF14 einen hohen Spannungswert an seinem Ausgang, an dessen Eingang gerade ein einen aktiven Zustand aufweisendes Hilfstaktsignal anliegt. Bei einem Zustandswechsel des Digitalsignals vom niedrigen zum hohen Spannungswert liefert nur dasjenige Flip-Flop FF21...FF24 einen hohen Spannungswert an seinem Ausgang, an dessen Eingang gerade ein einen aktiven Zustand aufweisendes Hilfstaktsignal anliegt. Die Ausgangssignale der Flip-Flops FF11 und FF21 werden in einem die logische ODER-Funktion realisierenden Gatter G11 verknüpft. Die Ausgangssignale der Flip-Flops FF12 und FF22 werden in einem ODER-Gatter G12 verknüpft. Die Ausgangssignale der Flip-Flops FF13 und FF23 werden in einem ODER-Gatter G13 verknüpft. Die Ausgangssignale der Flip-Flops FF14 und FF24 werden in einem ODER-Gatter G14 verknüpft. Mit jedem Signalzustandswechsel des Digitalsignals liefert also eines der Gatter G11...G14 einen hohen Spannungszustand, der ein Koinzidenz-Hilfstaktsignal bildet. Die Ausgänge der Gatter G11...G14 sind jeweils mit dem Takteingang eines zugehörigen Flip-Flops FF31...FF34 verbunden. Die mit D bezeichneten Eingänge der Flip-Flops FF31...FF34 sind mit einem mit "1" bezeichneten hohen Spannungswert beaufschlagt. Mit dem Auftreten eines aktuellen Koinzidenz-Hilfstaktsignals wird also ein mit diesem Koinzidenz-Hilfstaktsignal korreliertes Flip-Flop der Flip-Flops FF31...FF34 gesetzt. Im übrigen sind die Ausgänge der Gatter G11...G14 mit Eingängen eines die logische ODER-Verknüpfung realiserenden Gatters G5 verbunden. Der Ausgang des Gatters G5 ist mit den mit R bezeichneten Reset-Eingängen der Flip-Flops FF11...FF14 und FF21.. ..FF24 verbunden. Mit dem Auftreten eines Koinzidenz-Hilfstaktsignals werden also die Flip-Flops FF11...FF14 und FF21...FF24 in den Grundzustand zurückgesetzt, bei dem die Flip-Flops an ihren Ausgängen Q einen niedrigen Spannungswert abgeben. Aus dem Grundzustand heraus stehen die Flip-Flops FF11...FF14 und FF21...FF24 für die erneute Bereitstellung eines neuen Koinzidenz-Hilfstaktsignals beim nächstfolgenden Zustandswechsel des Digitalsignals bereit.

Die Ausgänge der Flip-Flops FF31...FF34 sind jeweils mit einem Eingang von zugehörigen, die logische UND-Verknüpfung realisierenden Gattern G41...G44 verbunden. Der andere Eingang des jeweiligen Gatters G41...G44 ist mit dem Hilfstaktsignal beaufschlagt, das gegenüber dem mit dem betrachteten Flip-Flop korrelierten Koinzidenz-Hilfstaktsignal um eine Periode P des Taktsignals TS phasenverschoben ist. Das augenblickliche Koinzidenz-Hilfstaktsignal wird also beim Übergang in den aktiven Zustand des Hilfstaktsignals, das gegenüber diesem Koinzidenz-Hilfstaktsignal um eine Periode des Taktsignals phasenverschoben ist, zum Ausgang des zugehörigen Gatters G41...G44 durchgeschaltet. Die Ausgangssignale der Gatter G41...G44 werden den Eingängen eines die logische ODER-Verknüpfung realisierenden Gatters G6 zugeführt. Das Ausgangssignal des Gatters G6 wird - gegebenenfalls nach Verzögerung in einer Verzögerungseinrichtung V2 - dem Takteingang des Speicherelements zugeführt. Das Speicherelement übernimmt also mit dem Übergang in den aktiven Zustand des Hilfstaktsignals, das gegenüber dem Koinzidenz-Hilfstaktsignal um eine Periode des Taktsignals phasenverschoben ist, den aktuellen Zustand des Digitalsignals in das Speicherelement. Am Ausgang Q des Speicherelements liegt der zuletzt übernommene Zustand DSA des Digitalsignals und am Ausgang $\overline{Q}$ des Speicherelements der invertierte Zustand $\overline{DSA}$ des Digitalsignals an.

Im übrigen sind die Ausgänge der Flip-Flops FF31...FF34 jeweils mit einem Eingang von die logische UND-Verknüpfung realisierenden Gattern G21...G24 verbunden. Die Ausgänge der Gatter G21...G24 sind mit den mit R bezeichneten Reset-Eingängen der zugehörigen Flip-Flops FF31...FF34 verbunden. Mit dem jeweils anderen Eingang der Gatter G21...G24 ist der Ausgang eines die logische ODER-Verknüpfung realisierenden Gatters G31...G34 verbunden. Die Gatter G31...G34 sind jeweils an ihren drei Eingängen mit den Ausgängen der drei nicht-zugehörigen Flip-Flops FF31.. ..FF34 verbunden. Ein jeweiliges gesetztes Flip-Flop FF31.. ..FF34 wird also zurückgesetzt, wenn eines der jeweils anderen Flip-Flops FF31...FF34 gesetzt wird. Erfolgt von einem ersten Bit-Übertragungszeitraum zu einem nächstfolgenden Bit-Übertragungszeitraum des Digitalsignals kein Zustandswechsel des Digitalsignals, so bleibt in dem nächstfolgenden Bit-Übertragungszeitraum dasselbe Flip-Flop gesetzt, wie in dem ersten Bit-Übertragungszeitraum, womit das Digitalsignal während des nächstfolgenden Bit-Übertragungszeitraums mit demselben Koinzidenz-Hilfstaktsignal abgefragt wird, wie in dem ersten Bit-Übertragungszeitraum. In der Figur sind weiterhin eine unmittelbar vor dem D-Eingang des Speicherelements angeordnete Verzögerungseinrichtung V1 und eine zwischen dem Gatter G6 und dem Takteingang des Speicherelements angeordnete Verzögerungseinrichtung V2 zu erkennen. Diese Verzögerungseinrichtungen dienen der Justierung des Abfragezeitpunkts des Digitalsignals etwa in der Mitte des Bit-Übertragungszeitraumes des Digitalsignals unter Berücksichtigung von Signallaufzeiten in der Schaltungsanordnung, der Bitfolgefrequenz des Digitalsignals und der Bitfolgefrequenzbeziehung zwischen Digitalsignal und Taktsignal.

Weiterhin ist in Fig. 3 in Zeile DSE der mögliche Verlauf eines Digitalsignals dargestellt. Das Digitalsignal möge zum Zeitpunkt t1 einen Zustandswechsel ausführen. Dieser Zustandswechsel fällt in den aktiven Zustand des Hilfstaktsignals T2, womit das Hilfstaktsignal T2 das aktuelle Koinzidenz-Hilfstaktsignal bildet. Damit wird das Digitalsignal mit dem gegenüber dem aktuellen Koinzidenz-Hilfstaktsignal T2 eine Periode des Taktsignals phasenverschobenen Hilfstaktsignal T4 abgefragt. In Zeile E verweist ein Bezugspfeil vom Signalzustandswechsel des Digitalsignals im Zeitpunkt t1 auf das Einlesetaktsignal E, mit dessen Übergang in den aktiven Zustand der aktuelle Zustand des Digitalsignals in das Speicherelement übernommen wird.

Zwei Taktperioden des Taktsignals nach dem Zeitpunkt t1 weist das Digitalsignal zum Zeitpunkt t2 einen regulären Zustandswechsel auf, womit der neue Zustand des Digitalsignals ebenso wie für den Zustandswechsel zum Zeitpunkt t1 in das Speicherelement übernommen wird.

Zum Zeitpunkt t3 möge ein Zustandswechsel auf Grund von Phasenjitter oder Verzerrungen früher als erwartet und während des aktiven Zustands des Hilfstaktsignals T1 erfolgen. Der neue Zustand nach dem Zustandswechsel zum Zeitpunkt t3 wird nun mit dem Hilfstaktsignal T3 in das Speicherelement übernommen.

Zwei Taktperioden des Taktsignals nach dem Zeitpunkt t3 möge nun kein Zustandswechsel des Digitalsignals erfolgen, womit das Digitalsignal zum Zeitpunkt t4 weiterhin mit dem Hilfstaktsignal T3 abgefragt wird.

**Patentansprüche**

1. Verfahren zur Übernahme eines Digitalsignals (DSE) in ein Speicherelement (SE) unter Zuhilfenahme eines die doppelte Bitfolgefrequenz des Digitalsignals aufweisenden Taktsignals (TS),
   **dadurch gekennzeichnet,**
   daß
   - aus dem Taktsignal eine Anzahl von vier Hilfstaktsignalen (T1...T4) abgeleitet werden, die jeweils während zweier Periodendauern des Taktsignals für eine halbe Periodendauer des Taktsignals einen aktiven Zustand einnehmen und die untereinander um eine halbe Periodendauer des Taktsignals phasenverschoben sind,
   - bei jedem Zustandswechsel des Digitalsignals das Hilfstaktsignal, in dessen aktiven Zustand der Zustandswechsel fällt, ein aktuelles Koinzidenz-Hilfstaktsignal bildet, wobei ein mit dem aktuellen Koinzidenz-Hilfstaktsignal korreliertes Flip-Flop (FF31...FF34) gesetzt wird,
   - das Ausgangssignal des gesetzten Flip-Flops in Verbindung mit dem jedesmaligen Übergang in den aktiven Zustand des Hilfstaktsignals, das gegenüber dem aktuellen Koinzidenz-Hilfstaktsignal um eine Periode des Taktsignals phasenverschoben ist, die Übernahme des aktuellen Zustandes des Digitalsignals in das Speicherelement bewirkt,
   - bei einem Wechsel des Koinzidenz-Hilfstaktsignals das mit dem bisher gültigen Koinzidenz-Hilfstaktsignal korrelierte Flip-Flop zurückgesetzt wird.

2. Schaltungsanordnung zur Übernahme eines Digitalsignals in ein Speicherelement unter Zuhilfenahme eines die doppelte Bitfolgefrequenz des Digitalsignals aufweisenden Taktsignals,
   **dadurch gekennzeichnet,**
   daß
   - eine Hilfstakterzeugungseinrichtung (HTEE) an ihrem Eingang mit dem Taktsignal beaufschlagt ist und an ihren Ausgängen eine Anzahl von vier Hilfstaktsignalen abgibt, die jeweils während zweier Periodendauern des Taktsignals für eine halbe Periodendauer des Taktsignals einen aktiven Zustand einnehmen und die gegenseitig um eine halbe Periodendauer des Taktsignals phasenverschoben sind,
   - jedem Ausgang der Hilfstakterzeugungseinrichtung ein Flip-Flop zugeordnet ist, das setzbar ist, wenn der zugehörige Ausgang gerade ein, einen aktiven Zustand aufweisendes Taktsignal führt und das Digitalsignal einen Zustandswechsel ausführt,
   - durch das gesetzte Flip-Flop der Ausgang der Hilfstakterzeugungseinrichtung vorbestimmbar ist, der ein gegenüber dem mit dem gesetzten Flip-Flop verbundenen Ausgang der Hilfstakterzeugungseinrichtung um eine Periode des Taktsignals phasenverschobenes Hilfstaktsignal führt,
   - der am Eingang (D) des Speicherelementes anliegende Zustand des Digitalsignals übernehmbar ist, wenn das an dem vorbestimmten Ausgang abgegebene Hilfstaktsignal jedesmal in den aktiven Zustand übergeht,
   - ein gesetztes Flip-Flop rücksetzbar ist, wenn ein aktueller Zustandswechsel des Digitalsignals erfolgt, während jeweils ein anderer Ausgang der Hilfstakterzeugungseinrichtung ein einen aktiven Zustand aufweisendes Hilftaktsignal führt.

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-3 582 789 (JOHN R. MICK) <br> * Spalte 1, Zeile 57 - Spalte 2, Zeile 11 * <br><br> * Spalte 3, Zeile 57 - Spalte 5, Zeile 55 * <br> --- | 1,2 | H04L7/033 |
| A | WO-A-8 805 236 (GRUMMAN AEROSPACE CORPORATION) <br> * Seite 3, Zeile 17 - Seite 4, Zeile 21 * <br> --- | 1,2 | |
| D,A | EP-A-0 408 969 (SIEMENS AKTIENGESELLSCHAFT) <br> * Spalte 2, Zeile 17 - Spalte 3, Zeile 56 * <br><br> ----- | 1,2 | |
| | | | **RECHERCHIERTE SACHGEBIETE (Int. Cl.5 )** <br><br> H03L <br> H04L |

Der vorliegende Recherchenbericht wurde für alle Patentansprüche erstellt

| Recherchenort | Abschlußdatum der Recherche | Prüfer |
|---|---|---|
| DEN HAAG | 30 JULI 1993 | VAN DEN BERG J.G.J. |